(19) Europäisches Patentamt
European Patent Office
Office européen des brevets

(11) **EP 3 301 914 A1**

(12) **EUROPEAN PATENT APPLICATION**

(43) Date of publication:
**04.04.2018 Bulletin 2018/14**

(21) Application number: **16306262.3**

(22) Date of filing: **30.09.2016**

(51) Int Cl.:
*H04N 19/105* (2014.01)     *H04N 19/13* (2014.01)
*H04N 19/176* (2014.01)     *H04N 19/52* (2014.01)
*H04N 19/597* (2014.01)     *H04N 19/593* (2014.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **RATH, Gagan**
**35576 Cesson-Sévigné Cedex (FR)**
• **GALPIN, Franck**
**35576 Cesson-Sévigné Cedex (FR)**
• **RACAPE, Fabien**
**35576 Cesson-Sévigné Cedex (FR)**
• **POIRIER, Tangi**
**35576 Cesson-Sévigné Cedex (FR)**
• **LELEANNEC, Fabrice**
**35576 Cesson-Sévigné Cedex (FR)**

(74) Representative: **Huchet, Anne**
**TECHNICOLOR**
**1-5, rue Jeanne d'Arc**
**92130 Issy-les-Moulineaux (FR)**

(54) **METHOD AND APPARATUS FOR ENCODING AND DECODING A LARGE FIELD OF VIEW
VIDEO**

(57)     A method and an apparatus for coding a large field of view video into a bitstream are disclosed. At least one picture of said large field of view video is represented as a surface, said surface being projected onto at least one 2D picture using a projection function. For at least one current block of said at least one 2D picture, at least one neighbor block of said 2D picture not spatially adjacent to said current block in said 2D picture is determined from said projection function, and said at least one neigh- bor block is spatially adjacent to said current block on said surface. Said current block is then encoded using at least said determined neighbor block. Corresponding decoding method and apparatus are also disclosed.

```
┌─────────────────────┐
│      DECODING       │──── 1900
│     PROJECTION      │
│      FUNCTION       │
└─────────────────────┘
           │
           ▼
┌─────────────────────┐
│     DETERMINING     │──── 1901
│   NEIGHBOR BLOCK    │
└─────────────────────┘
           │
           ▼
┌─────────────────────┐
│   DECODING BLOCK    │──── 1902
└─────────────────────┘
```

FIG. 19

EP 3 301 914 A1

**Description**

1. Technical field

The present disclosure relates to encoding and decoding immersive videos, for example when such immersive videos are processed in a system for virtual reality, augmented reality or augmented virtuality and for instance when displayed in a head mounted display device.

2. Background

Recently there has been a growth of available large field-of-view content (up to 360°). Such content is potentially not fully visible by a user watching the content on immersive display devices such as Head Mounted Displays, smart glasses, PC screens, tablets, smartphones and the like. That means that at a given moment, a user may only be viewing a part of the content. However, a user can typically navigate within the content by various means such as head movement, mouse movement, touch screen, voice and the like. It is typically desirable to encode and decode this content.

3. Summary

According to an aspect of the present principle, a method for coding a large filed of view video into a bitstream is disclosed. At least one picture of said large field of view video is represented as a 3D surface, said 3D surface being projected onto at least one 2D picture using a projection function. The encoding method comprises, for at least one current block of said at least one 2D picture,

- determining from said projection function, at least one neighbor block of said 2D picture not spatially adjacent to said current block in said 2D picture, said at least one neighbor block being spatially adjacent to said current block on said 3D surface,
- encoding said current block using at least said determined neighbor block.

The present principle allows determining a new neighboring for a current block to be coded according to the projection function used to project the 3D surface onto one or more pictures, when spatially adjacent neighboring blocks on the 3D surface are available for coding the current block. For instance, when the current block is located at the border of a 2D rectangular picture or at the border of a face of a cube projection, blocks spatially adjacent to the current block on the 3D surface which have already been coded and decoded can be determined as new neighboring blocks for coding the current block. Such an adapted neighborhood of the current block allows restoring the spatially adjacent neighborhood of a region in a 3D surface when such 3D surface is projected on a 2D picture.

The adapted neighboring can be used by any encoding modules of a 2D video coder for encoding the current block, thus allowing to increase compression efficiency of a 2D video coding scheme applied to a large field of view video.

According to an embodiment of the present disclosure, encoding said current block belongs to a group comprising at least:

- determining a most probable mode list for coding an intra prediction mode for said current block,
- deriving a motion vector predictor for coding a motion vector for said current block,
- deriving motion information in an inter-prediction merging mode for coding said current block,
- contextual arithmetic entropy coding said current block,
- sample adaptive offset filtering at least one sample of said current block.

According to another embodiment of the present disclosure, the encoding method further comprises coding an item of information relating to said projection function.

A method for decoding a bitstream representative of a large field of view video is also disclosed. Such a decoding method comprises, for at least one current block of said at least one 2D picture representative of a projection of a picture of the large field of view video represented as a 3D surface:

- determining from said projection function, at least one neighbor block of said 2D picture not spatially adjacent to said current block in said 2D picture, said at least one neighbor block being spatially adjacent to said current block on said 3D surface,
- decoding said current block using at least said determined neighbor block.

According to an embodiment of the present disclosure, decoding said current block belongs to a group comprising at least:

- determining a most probable mode list for decoding an intra prediction mode for said current block,
- deriving a motion vector predictor for reconstructing a motion vector for said current block,
- deriving motion information in an inter-prediction merging mode for reconstructing said current block,
- contextual arithmetic entropy decoding said current block,
- sample adaptive offset for filtering at least one sample of said current block.

According to another embodiment of the present disclosure, said decoding method further comprises decoding an item of information relating to said projection function.

According to another embodiment of the present disclosure, the 3D surface is a sphere and the projection function is an equi-rectangular projection. According to a variant of this embodiment, the current block is located on a right border of the 2D picture and the at least one neighbor block is located on a left border of the 2D picture.

According to another embodiment of the present disclosure, encoding or decoding said current block comprises constructing a predictor list comprising at least prediction data obtained from said at least one neighbor block and wherein data from said current block is coded or decoded using a selected candidate of prediction data from said predictor list.

According to this embodiment, prediction data provided by the new determined neighbor block of the current block is added to a predictor list used for coding or decoding the current block. For instance, such a predictor list may be a Most Probable Mode of intra prediction mode when the current block is intra-coded. When the current block is inter-predicted, the predictor list may correspond to a set of motion vector predictors for predicting a motion vector of the current block or to a set of motion candidate from which the current block inherits motion information for predicting the current block.

The predictor list may also correspond to filtering parameters, e.g. sample adaptive offset parameters, also known as SAO from the HEVC standards, which the current block inherits for processing reconstructed pixels of the current block.

An apparatus for coding a large field of view video into a bitstream is also disclosed. Such an apparatus comprises, for at least one current block of said at least one 2D picture representative of a projection of a picture of the large field of view video represented as a 3D surface: means for determining from said projection function, at least one neighbor block of said 2D picture not spatially adjacent to said current block in said 2D picture, said at least one neighbor block being spatially adjacent to said current block on said 3D surface, and means for encoding said current block using at least said determined neighbor block.

An apparatus for decoding a bitstream representative of a large field of view video is also disclosed. Said apparatus comprising, for at least one current block of said at least one 2D picture representative of a projection of a picture of the large field of view video represented as a 3D surface:

- means for determining from said projection function, at least one neighbor block of said 2D picture not spatially adjacent to said current block in said 2D picture, said at least one neighbor block being spatially adjacent to said current block on said 3D surface,
- means for decoding said current block using at least said determined neighbor block.

A bitstream representative of a coded large field of view video is also disclosed. At least one picture of said large field of view video is represented as a 3D surface, said 3D surface being projected onto at least one 2D picture using a projection function. The bitstream comprises coded data representative of at least one current block of said 2D picture, said current block being coded using at least one neighbor block of said 2D picture not spatially adjacent to said current block in said 2D picture, said at least one neighbor block being spatially adjacent to said current block on said 3D surface.

According to an embodiment of the present disclosure, the bitstream further comprises coded data representative of an item of information relating to said projection function.

According to another embodiment of the present disclosure, the bitstream is stored on a non-transitory processor readable medium.

An immersive rendering device comprising an apparatus for decoding a bitstream representative of a large field of view video is also disclosed.

A system for immersive rendering of a large field of view video encoded into a bitstream is also disclosed. Such a system comprises at least:

- a network interface for receiving said bitstream from a data network,
- an apparatus for decoding said bitstream according to any one of the embodiments disclosed herein,
- an immersive rendering device for rendering a decoded large field of view video.

According to one implementation, the different steps of the method for coding a large field of view video or for decoding a bitstream representative of a large field of view video as described here above are implemented by one or more software programs or software module programs comprising software instructions intended for execution by a data processor of an apparatus for coding a large field of view video or for decoding a bitstream representative of a large field of view video, these software instructions being designed to command the execution of the different steps of the methods according to the present principles.

A computer program is also disclosed that is capable of being executed by a computer or by a data processor, this program comprising instructions to command the execution of the steps of a method for coding a large field of view video or of the steps of a method for decoding a bitstream representative of a large field of view video as mentioned here above.

This program can use any programming language whatsoever and be in the form of source code, object code or intermediate code between source code and object code, such as in a partially compiled form or any other desirable form whatsoever.

The information carrier can be any entity or apparatus whatsoever capable of storing the program. For example, the carrier can comprise a storage means such as a ROM, for example a CD ROM or a microelectronic circuit ROM or again a magnetic recording means, for example a floppy disk or a hard disk drive.

Again, the information carrier can be a transmissible carrier such as an electrical or optical signal which can be conveyed via an electrical or optical cable, by radio or by other means. The program according to the present principles can be especially uploaded to an Internet type network.

As an alternative, the information carrier can be an integrated circuit into which the program is incorporated, the circuit being adapted to executing or to being used in the execution of the methods in question.

According to one embodiment, the methods/apparatus may be implemented by means of software and/or hardware components. In this respect, the term "module" or "unit" can correspond in this document equally well to a software component and to a hardware component or to a set of hardware and software components.

A software component corresponds to one or more computer programs, one or more subprograms of a program or more generally to any element of a program or a piece of software capable of implementing a function or a set of functions as described here below for the module concerned. Such a software component is executed by a data processor of a physical entity (terminal, server, etc.) and is capable of accessing hardware resources of this physical entity (memories, recording media, communications buses, input/output electronic boards, user interfaces, etc.).

In the same way, a hardware component corresponds to any element of a hardware unit capable of implementing a function or a set of functions as described here below for the module concerned. It can be a programmable hardware component or a component with an integrated processor for the execution of software, for example an integrated circuit, a smartcard, a memory card, an electronic board for the execution of firmware, etc.

In addition to omnidirectional video, the present principles also apply to large field of view video content, e.g. 180°.

4. Brief description of the drawings

Figure 1 represents a functional overview of an encoding and decoding system according to a preferred environment of the embodiments of the disclosure,
Figure 2 represents a first embodiment of a system according to the present disclosure,
Figure 3 represents a first embodiment of a system according to the present disclosure,
Figure 4 represents a first embodiment of a system according to the present disclosure,
Figure 5 represents a first embodiment of a system according to the present disclosure,
Figure 6 represents a first embodiment of a system according to the present disclosure,
Figure 7 represents a first embodiment of a system according to the present disclosure,
Figure 8 represents a first embodiment of a system according to the present disclosure,
Figure 9 represents a first embodiment of a system according to the present disclosure,
Figure 10 represents a first embodiment of an immersive video rendering device according to the present disclosure,
Figure 11 represents a first embodiment of an immersive video rendering device according to the present disclosure,
Figure 12 represents a first embodiment of an immersive video rendering device according to the present disclosure,
Figure 13A illustrates an example of projection from a spherical surface S onto a rectangular picture F,
Figure 13B illustrates an XY-plane reference system of a picture F,
Figure 13C illustrates an angular reference system on the sphere S,
Figure 14A illustrates an example of projection from a cubic surface S onto 6 pictures,
Figure 14B illustrates a cube reference system,
Figure 14C illustrates an XY-plane reference system of a 2D picture F,

Figure 14D illustrates a layout of the 6 faces of a cube projected on a 2D picture,

Figure 14E illustrates a corresponding re-arranged rectangular picture according to the layout shown in figure 14D,

Figure 15 illustrates causal spatial neighborhood from a conventional video coding scheme,

Figure 16A illustrates a rectangular picture onto which an omnidirectional video represented as a sphere has been projected using an equi-rectangular projection,

Figure 16B illustrates a rectangular picture onto which an omnidirectional video represented as a cube has been projected using a cube projection and a layout of the 6 faces according to figure 14D,

Figure 17 illustrates block diagrams for an exemplary method for coding a current block of a 2D picture being a projection of an omnidirectional video, according to an embodiment of the present disclosure,

Figure 18 illustrates block diagrams for an exemplary method for coding an omnidirectional video into a bitstream according to an embodiment of the present disclosure,

Figure 19 illustrates block diagrams for an exemplary method for decoding a current block of a 2D picture being a projection of an omnidirectional video, according to an embodiment of the present disclosure,

Figure 20 illustrates block diagrams of an exemplary method for decoding a current block of a 2D picture representative of a 3D picture of an omnidirectional video, from a bitstream according to an embodiment of the present disclosure,

Figure 21 illustrates an exemplary apparatus for encoding an omnidirectional video into a bitstream according to one embodiment,

Figure 22 illustrates an exemplary apparatus for decoding a bitstream representative of an omnidirectional video according to one embodiment,

Figure 23 illustrates an adapted neighborhood for a current block for determining a most probable intra prediction mode according to an embodiment of the present disclosure,

Figure 24 illustrates an adapted neighborhood for a current block for deriving a motion vector predictor or motion information, according to an embodiment of the present disclosure,

Figure 25 illustrates an adapted neighborhood for a current block for deriving a context for contextual arithmetic binary coding, according to an embodiment of the present disclosure,

Figure 26 illustrates an adapted neighborhood for a current block for deriving sample adaptive offset parameters, according to an embodiment of the present disclosure.

## 5. Detailed Description

A large field-of-view content may be, among others, a three-dimension computer graphic imagery scene (3D CGI scene), a point cloud or an immersive video. Many terms might be used to design such immersive videos such as for example Virtual Reality (VR), 360, panoramic, $4\pi$ steradians, immersive, omnidirectional, large field of view.

For coding an omnidirectional video into a bitstream, for instance for transmission over a data network, traditional video codec, such as HEVC, H.264/AVC, could be used. Each picture of the omnidirectional video is thus first projected on one or more 2D pictures, for example one or more rectangular pictures, using a suitable projection function. In practice, a picture from the omnidirectional video is represented as a 3D surface. For ease of projection, usually a convex and simple surface such as a sphere, or a cube, or a pyramid are used for the projection. The projected 2D pictures representative of the omnidirectional video are then coded using a traditional video codec.

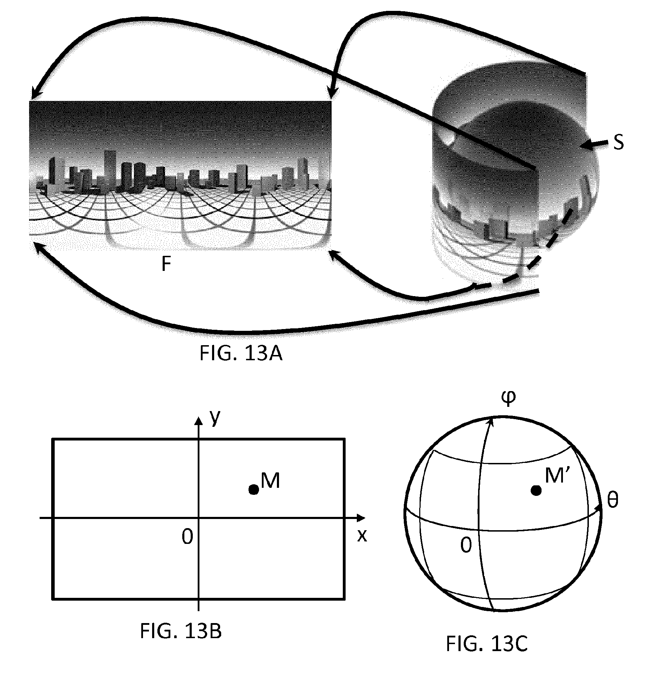

Figure 13A shows an example of projecting a frame of an omnidirectional video mapped on a surface S represented as a sphere onto one rectangular picture I using an equi-rectangular projection.

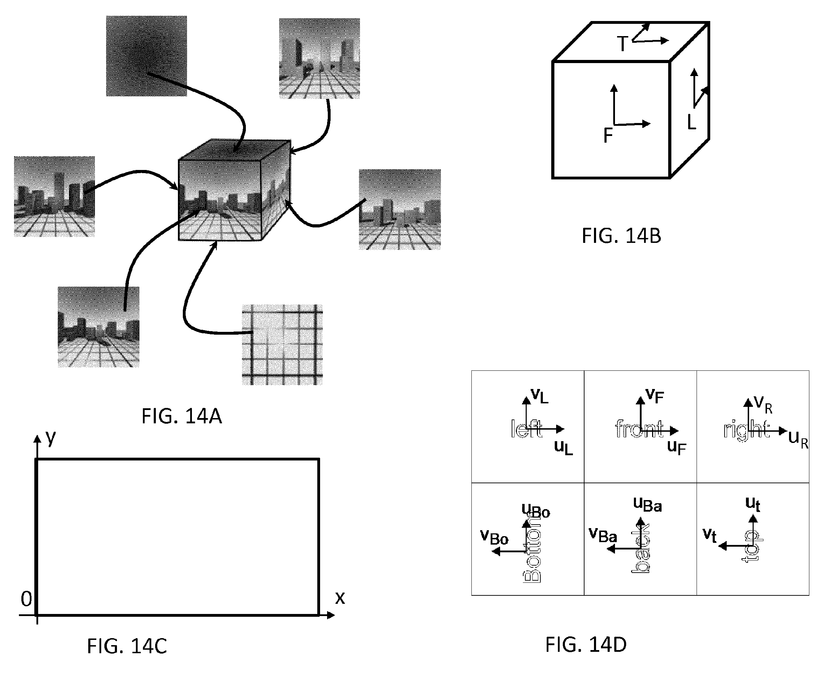

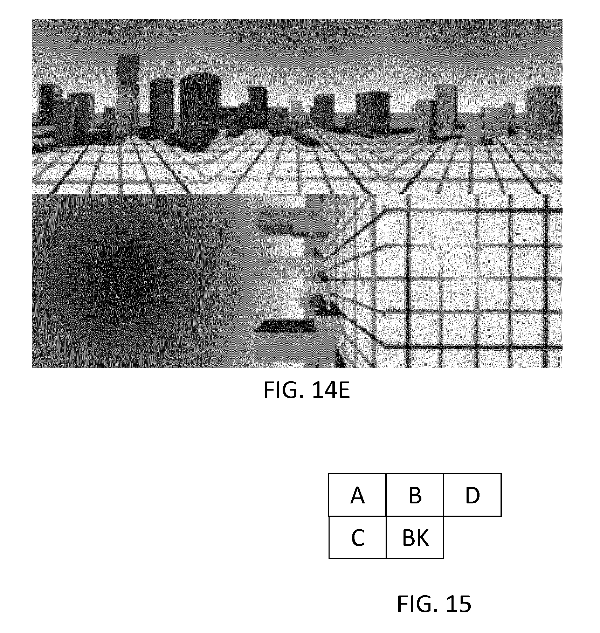

Figure 14A shows another example of projecting a frame of an omnidirectional video mapped on the surface S, here represented as a cube, onto six pictures or faces. The faces of the cube which reference system is illustrated on figure 14B, can possibly be re-arranged into one rectangular picture as shown in figure 14E using a layout illustrated on figure 14D.

For coding an omnidirectional video, the projected rectangular picture of the surface can then be coded using conventional video coding standards such as HEVC, H.264/AVC, etc... According to such standards, a 2D picture is encoded by first dividing it into small non-overlapping blocks and then by encoding those blocks individually. For reducing redundancies, conventional video coders use causal spatial neighboring blocks data for predicting the values of a current block to code. An example of such causal spatial neighboring blocks is illustrated on figure 15 wherein a current block to code BK has 4 neighboring blocks: A, B, C and D which have already been coded/decoded and are available for use in a coding step of the coding/decoding process for the current block BK. Such neighborhood may be used for intra prediction, most probable coding mode determination (known as MPM determination in HEVC, or H.264/AVC), motion vector prediction in inter picture coding. Such a neighborhood may be also be used for filtering a current block after encoding such as in a deblocking filtering process or a sample adaptive offset process (also known as SAO in HEVC). Depending on the process to be performed, other causal spatial/temporal neighborhood may be used.

Causal spatial neighboring blocks are here to be understood as blocks that have been already coded and decoded according to a scan order of the pictures (e.g. a raster scan order).

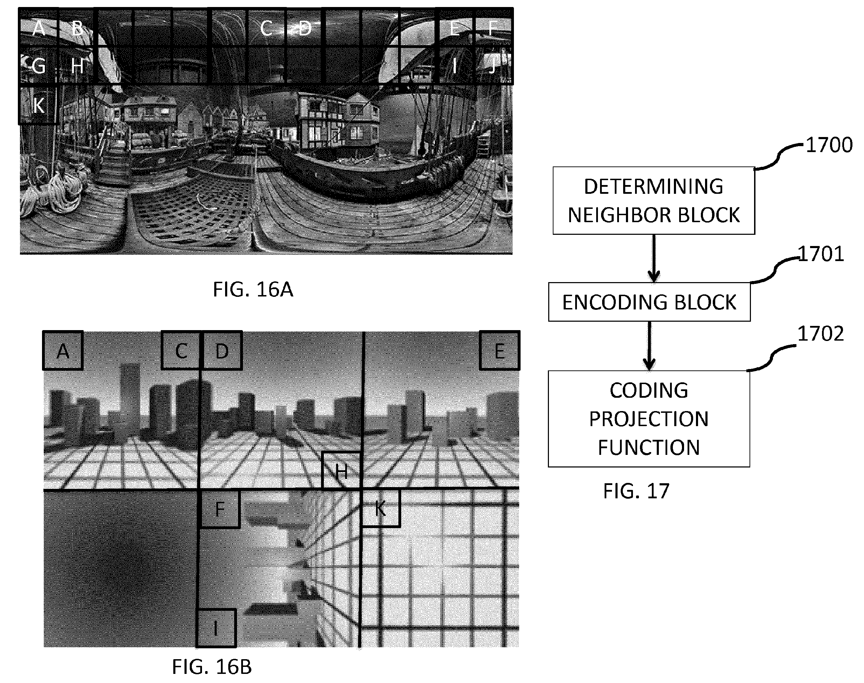

In an omnidirectional video, when using the equi-rectangular projection, because of the circular symmetry of a sphere, a block from the 3D surface has neighboring blocks on the left side of the block and on the right side of the block. However, when projecting the 3D surface onto a 2D rectangular picture, some neighboring blocks may not be available anymore for a block. For example, in the equi-rectangular projection, the blocks of the 3D surface that are projected onto blocks of the 2D picture located at the right border of the 2D picture are adjacent on the 3D surface to the blocks of the 3D surface that are projected onto 2D blocks located at the left border of the 2D picture. For example, as illustrated on figure 16A, on the 3D surface, blocks F and J located on the right border of the 2D picture are spatially adjacent to the blocks A and G.

However, in the 2D picture, the blocks located at the right border of the picture are no more adjacent to the blocks located at the left border of the picture. As illustrated on figure 16A, on the 2D picture, blocks F and J are no more spatially adjacent to blocks A and G.

Conventional video coding schemes code these blocks in a special manner as compared to the coding of 2D blocks not located at the border of the picture. Indeed, they have to deal with missing neighborhood.

Furthermore, when re-projecting the 2D picture onto the 3D surface after decoding of the 2D picture, some visual artifacts may appear at the latitude comprising the 3D blocks projected from 2D blocks located at the border of the 2D picture as the continuity of the 3D surface has been broken and adaptive treatment, such a pixels propagation or padding, may be applied in the encoding process of the 2D picture.

Similar problems arises when representing an omnidirectional video as a 3D cube and re-arranging the projected 6 faces of the cube on a rectangular picture as illustrated in figures 14E or 14F. In such projected pictures, the blocks located on the borders of the projected faces of the cube cannot benefit in the 2D picture from causal neighboring blocks belonging to adjacent faces on the 3D cube.

Therefore, there is a need for a novel encoding and decoding method of omnidirectional videos.

The present principle is disclosed here in the case of omnidirectional video, it may also be applied in case of conventional plane images acquired with very large field of view, i.e. acquired with very small focal length like fish eye lens.

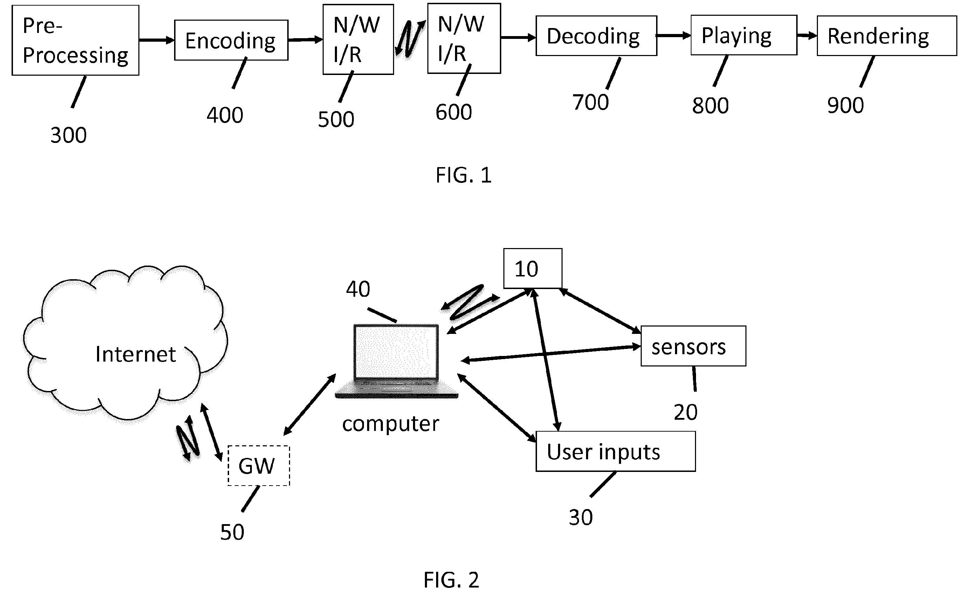

Figure 1 illustrates a general overview of an encoding and decoding system according to example embodiment. The system of figure 1 is a functional system. A pre-processing module 300 may prepare the content for encoding by the encoding device 400. The pre-processing module 300 may perform multi-image acquisition, merging of the acquired multiple images in a common space (typically a 3D sphere if we encode the directions), and mapping of the 3D sphere into a 2D frame using, for example, but not limited to, an equi-rectangular mapping or a cube mapping. The pre-processing module 300 may also accept an omnidirectional video in a particular format (for example, equi-rectangular) as input, and pre-processes the video to change the mapping into a format more suitable for encoding. Depending on the acquired video data representation, the pre-processing module may perform a mapping space change. The encoding device 400 and the encoding method will be described with respect to other figures of the specification. After being encoded, the data, which may encode immersive video data or 3D CGI encoded data for instance, are sent to a network interface 500, which can be typically implemented in any network interface, for instance present in a gateway. The data are then transmitted through a communication network, such as internet but any other network can be foreseen. Then the data are received via network interface 600. Network interface 600 can be implemented in a gateway, in a television, in a set-top box, in a head mounted display device, in an immersive (projective) wall or in any immersive video rendering device. After reception, the data are sent to a decoding device 700. Decoding function is one of the processing functions described in the following figures 2 to 12. Decoded data are then processed by a player 800. Player 800 prepares the data for the rendering device 900 and may receive external data from sensors or users input data. More precisely, the player 800 prepares the part of the video content that is going to be displayed by the rendering device 900. The decoding device 700 and the player 800 may be integrated in a single device (e.g., a smartphone, a game console, a STB, a tablet, a computer, etc.). In a variant, the player 800 is integrated in the rendering device 900.

Several types of systems may be envisioned to perform the decoding, playing and rendering functions of an immersive display device, for example when rendering an immersive video.

A first system, for processing augmented reality, virtual reality, or augmented virtuality content is illustrated in figures 2 to 6. Such a system includes processing functions, an immersive video rendering device which may be a head-mounted display (HMD), a tablet or a smartphone for example and may include sensors. The immersive video rendering device may also include additional interface modules between the display device and the processing functions. The processing functions can be performed by one or several devices. They can be integrated into the immersive video rendering device or they can be integrated into one or several processing devices. The processing device includes one or several processors and a communication interface with the immersive video rendering device, such as a wireless or wired communication interface.

The processing device can also include a second communication interface with a wide access network such as internet and access content located on a cloud, directly or through a network device such as a home or a local gateway. The processing device can also access a local storage through a third interface such as a local access network interface of Ethernet type. In an embodiment, the processing device may be a computer system having one or several processing units. In another embodiment, it may be a smartphone which can be connected through wired or wireless links to the immersive video rendering device or which can be inserted in a housing in the immersive video rendering device and communicating with it through a connector or wirelessly as well. Communication interfaces of the processing device are wireline interfaces (for example a bus interface, a wide area network interface, a local area network interface) or wireless interfaces (such as an IEEE 802.11 interface or a Bluetooth® interface).

When the processing functions are performed by the immersive video rendering device, the immersive video rendering device can be provided with an interface to a network directly or through a gateway to receive and/or transmit content.

In another embodiment, the system include an auxiliary device which communicates with the immersive video rendering device and with the processing device. In such an embodiment, this auxiliary device can contain at least one of the processing functions.

The immersive video rendering device may include one or several displays. The device may employ optics such as lenses in front of each of its display. The display can also be a part of the immersive display device like in the case of smartphones or tablets. In another embodiment, displays and optics may embedded in a helmet, in glasses, or in a visor that a user can wear. The immersive video rendering device may also integrate several sensors, as described later on. The immersive video rendering device can also include several interfaces or connectors. It might include one or several wireless modules in order to communicate with sensors, processing functions, handheld or other body parts related devices or sensors.

The immersive video rendering device can also include processing functions executed by one or several processors and configured to decode content or to process content. By processing content here, it is understood all functions to prepare a content that can be displayed. This may include, for instance, decoding a content, merging content before displaying it and modifying the content to fit with the display device.

One function of an immersive content rendering device is to control a virtual camera which captures at least a part of the content structured as a virtual volume. The system may include pose tracking sensors which totally or partially track the user's pose, for example, the pose of the user's head, in order to process the pose of the virtual camera. Some positioning sensors may track the displacement of the user. The system may also include other sensors related to environment for example to measure lighting, temperature or sound conditions. Such sensors may also be related to the users' bodies, for instance, to measure sweating or heart rate. Information acquired through these sensors may be used to process the content. The system may also include user input devices (e.g. a mouse, a keyboard, a remote control, a joystick). Information from user input devices may be used to process the content, manage user interfaces or to control the pose of the virtual camera. Sensors and user input devices communicate with the processing device and/or with the immersive rendering device through wired or wireless communication interfaces.

Using figures 2 to 6, several embodiments are described of this first type of system for displaying augmented reality, virtual reality, augmented virtuality or any content from augmented reality to virtual reality. Figure 2 illustrates a particular embodiment of a system configured to decode, process and render immersive videos. The system includes an immersive video rendering device 10, sensors 20, user inputs devices 30, a computer 40 and a gateway 50 (optional).

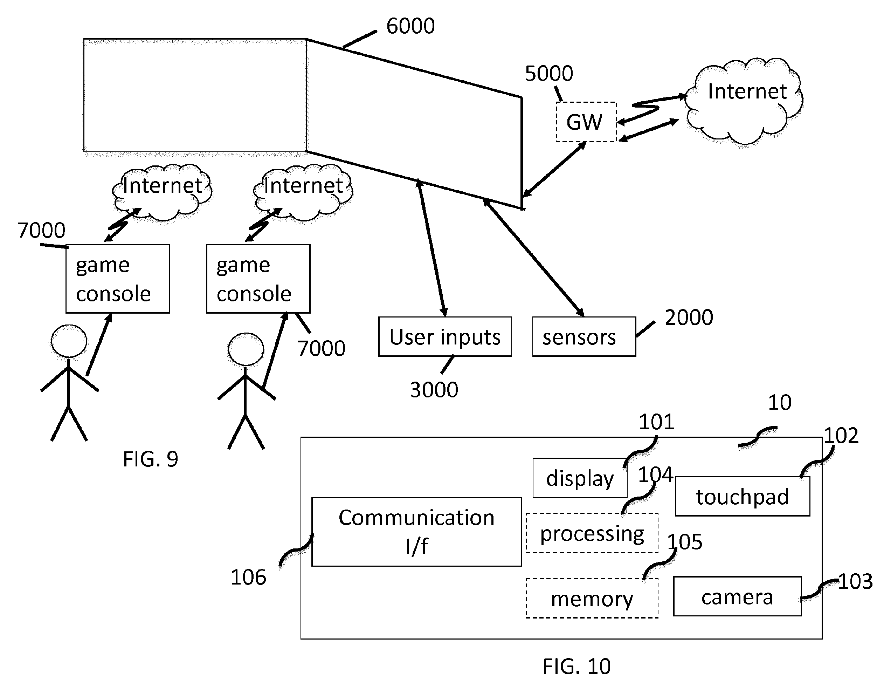

The immersive video rendering device 10, illustrated on Figure 10, includes a display 101. The display is, for example of OLED or LCD type. The immersive video rendering device 10 is, for instance a HMD, a tablet or a smartphone. The device 10 may include a touch surface 102 (e.g. a touchpad or a tactile screen), a camera 103, a memory 105 in connection with at least one processor 104 and at least one communication interface 106. The at least one processor 104 processes the signals received from the sensors 20. Some of the measurements from sensors are used to compute the pose of the device and to control the virtual camera. Sensors used for pose estimation are, for instance, gyroscopes, accelerometers or compasses. More complex systems, for example using a rig of cameras may also be used. In this case, the at least one processor performs image processing to estimate the pose of the device 10. Some other measurements are used to process the content according to environment conditions or user's reactions. Sensors used for observing environment and users are, for instance, microphones, light sensor or contact sensors. More complex systems may also be used like, for example, a video camera tracking user's eyes. In this case the at least one processor performs image processing to operate the expected measurement. Sensors 20 and user input devices 30 data can also be transmitted to the computer 40 which will process the data according to the input of these sensors.

Memory 105 includes parameters and code program instructions for the processor 104. Memory 105 can also include parameters received from the sensors 20 and user input devices 30. Communication interface 106 enables the immersive video rendering device to communicate with the computer 40. The Communication interface 106 of the processing device is wireline interfaces (for example a bus interface, a wide area network interface, a local area network interface) or wireless interfaces (such as an IEEE 802.11 interface or a Bluetooth® interface). Computer 40 sends data and optionally control commands to the immersive video rendering device 10. The computer 40 is in charge of processing the data, i.e. prepare them for display by the immersive video rendering device 10. Processing can be done exclusively by the computer 40 or part of the processing can be done by the computer and part by the immersive video rendering device 10. The computer 40 is connected to internet, either directly or through a gateway or network interface 50. The computer 40 receives data representative of an immersive video from the internet, processes these data (e.g. decodes them and possibly prepares the part of the video content that is going to be displayed by the immersive video rendering device 10) and sends the processed data to the immersive video rendering device 10 for display. In a variant, the system may also include local storage (not represented) where the data representative of an immersive video are stored, said local storage can be on the computer 40 or on a local server accessible through a local area network for instance (not represented).

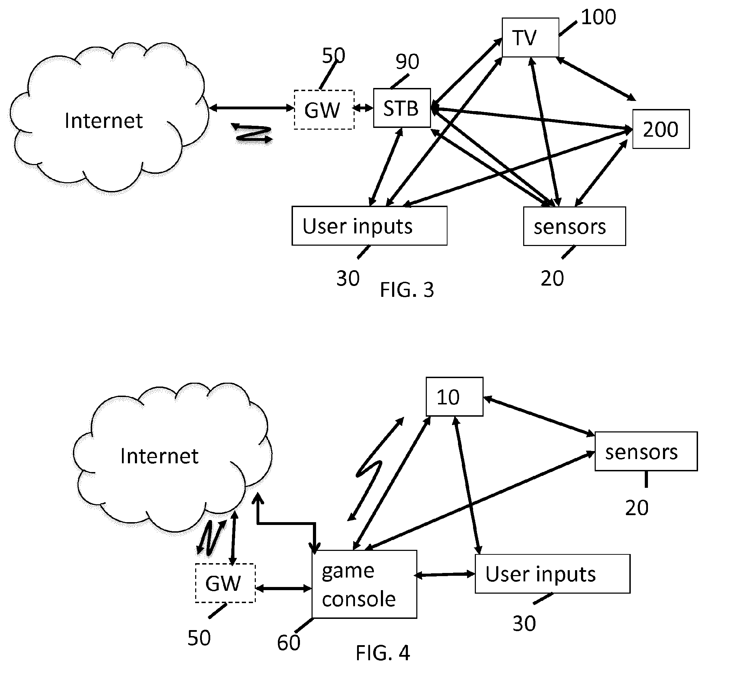

Figure 3 represents a second embodiment. In this embodiment, a STB 90 is connected to a network such as internet directly (i.e. the STB 90 includes a network interface) or via a gateway or network interface 50. The STB 90 is connected through a wireless interface or through a wired interface to rendering devices such as a television set 100 or an immersive video rendering device 200. In addition to classic functions of a STB, STB 90 includes processing functions to process video content for rendering on the television 100 or on any immersive video rendering device 200. These processing functions are the same as the ones that are described for computer 40 and are not described again here. Sensors 20 and user input devices 30 are also of the same type as the ones described earlier with regards to Figure 2. The STB 90 obtains the data representative of the immersive video from the internet. In a variant, the STB 90 obtains the data representative of the immersive video from a local storage (not represented) where the data representative of the immersive video are stored, said local storage can be on a local server accessible through a local area network for instance (not represented).

Figure 4 represents a third embodiment related to the one represented in Figure 2. The game console 60 processes the content data. Game console 60 sends data and optionally control commands to the immersive video rendering device 10. The game console 60 is configured to process data representative of an immersive video and to send the processed data to the immersive video rendering device 10 for display. Processing can be done exclusively by the game console 60 or part of the processing can be done by the immersive video rendering device 10.

The game console 60 is connected to internet, either directly or through a gateway or network interface 50. The game console 60 obtains the data representative of the immersive video from the internet. In a variant, the game console 60 obtains the data representative of the immersive video from a local storage (not represented) where the data representative of the immersive video are stored, said local storage can be on the game console 60 or on a local server accessible through a local area network for instance (not represented).

The game console 60 receives data representative of an immersive video from the internet, processes these data (e.g. decodes them and possibly prepares the part of the video that is going to be displayed) and sends the processed data to the immersive video rendering device 10 for display. The game console 60 may receive data from sensors 20 and user input devices 30 and may use them to process the data representative of an immersive video obtained from the internet or from the from the local storage.

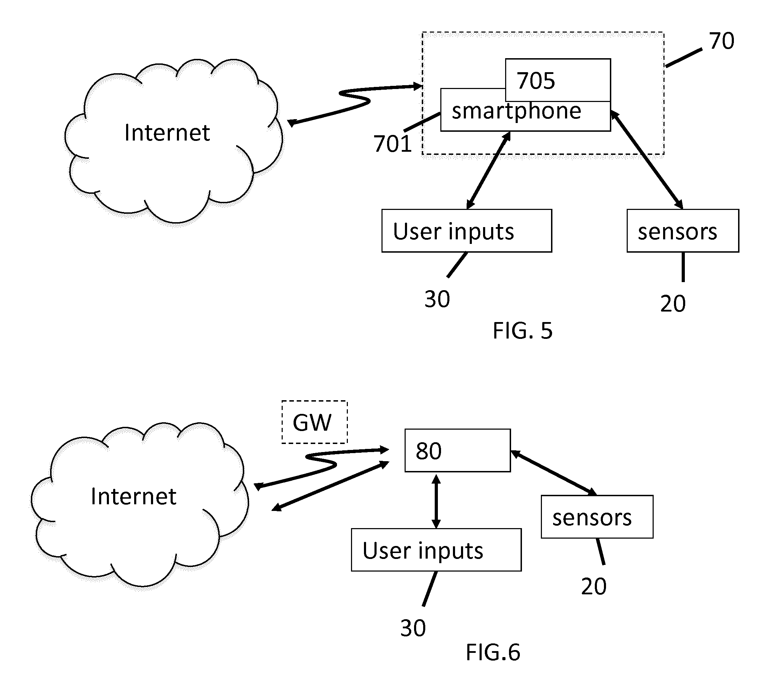

Figure 5 represents a fourth embodiment of said first type of system where the immersive video rendering device 70 is formed by a smartphone 701 inserted in a housing 705. The smartphone 701 may be connected to internet and thus may obtain data representative of an immersive video from the internet. In a variant, the smartphone 701 obtains data representative of an immersive video from a local storage (not represented) where the data representative of an immersive video are stored, said local storage can be on the smartphone 701 or on a local server accessible through a local area network for instance (not represented).

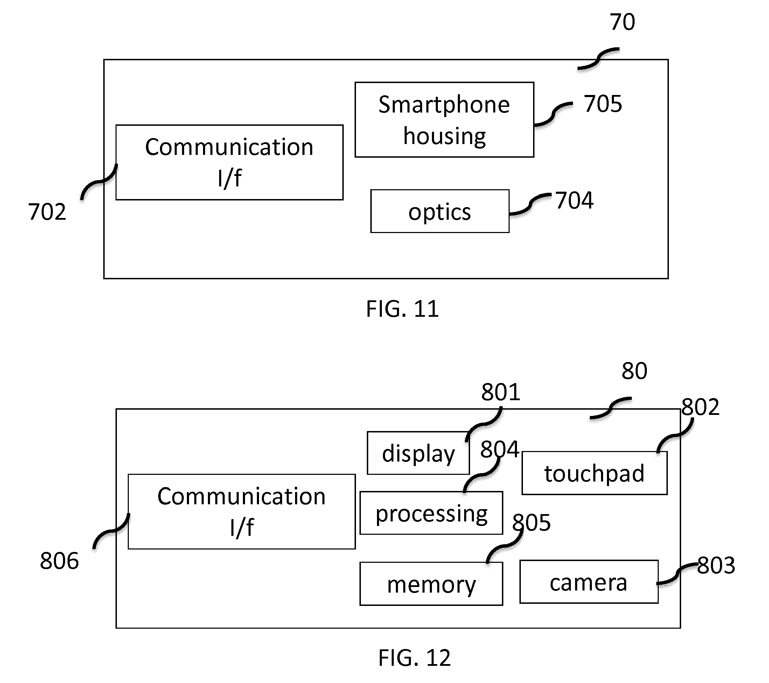

Immersive video rendering device 70 is described with reference to Figure 11 which gives a preferred embodiment of immersive video rendering device 70. It optionally includes at least one network interface 702 and the housing 705 for the smartphone 701. The smartphone 701 includes all functions of a smartphone and a display. The display of the smartphone is used as the immersive video rendering device 70 display. Therefore no display other than the one of the smartphone 701 is included. However, optics 704, such as lense, are included for seeing the data on the smartphone display. The smartphone 701 is configured to process (e.g. decode and prepare for display) data representative of an immersive video possibly according to data received from the sensors 20 and from user input devices 30. Some of the measurements from sensors are used to compute the pose of the device and to control the virtual camera. Sensors used for pose estimation are, for instance, gyroscopes, accelerometers or compasses. More complex systems, for example using a rig of cameras may also be used. In this case, the at least one processor performs image processing to estimate the pose of the device 10. Some other measurements are used to process the content according to environment conditions or user's reactions. Sensors used for observing environment and users are, for instance, microphones, light sensor or contact sensors. More complex systems may also be used like, for example, a video camera tracking user's eyes. In this case the at least one processor performs image processing to operate the expected measurement.

Figure 6 represents a fifth embodiment of said first type of system in which the immersive video rendering device 80 includes all functionalities for processing and displaying the data content. The system includes an immersive video rendering device 80, sensors 20 and user input devices 30. The immersive video rendering device 80 is configured to process (e.g. decode and prepare for display) data representative of an immersive video possibly according to data received from the sensors 20 and from the user input devices 30. The immersive video rendering device 80 may be connected to internet and thus may obtain data representative of an immersive video from the internet. In a variant, the immersive video rendering device 80 obtains data representative of an immersive video from a local storage (not represented) where the data representative of an immersive video are stored, said local storage can be on the immersive video rendering device 80 or on a local server accessible through a local area network for instance (not represented).

The immersive video rendering device 80 is illustrated on Figure 12. The immersive video rendering device includes a display 801. The display can be for example of OLED or LCD type, a touchpad (optional) 802, a camera (optional) 803, a memory 805 in connection with at least one processor 804 and at least one communication interface 806. Memory 805 includes parameters and code program instructions for the processor 804. Memory 805 can also include parameters received from the sensors 20 and user input devices 30. Memory can also be large enough to store the data representative of the immersive video content. Memory 805 may be of different types (SD card, hard disk, volatile or nonvolatile memory...). Communication interface 806 enables the immersive video rendering device to communicate with internet network. The processor 804 processes data representative of the video in order to display them of display 801. The camera 803 captures images of the environment for an image processing step. Data are extracted from this step in order to control the immersive video rendering device.

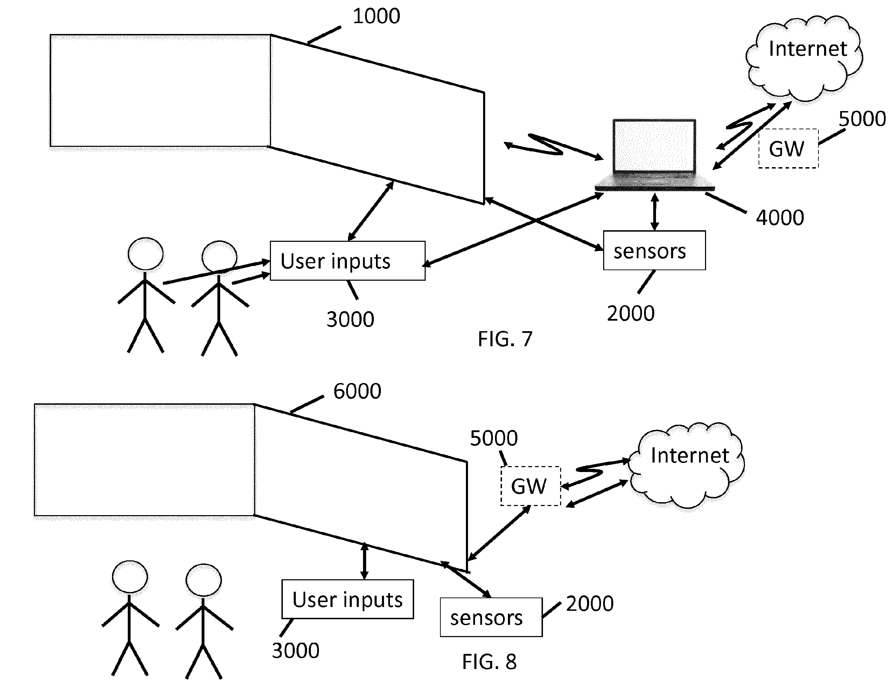

A second system, for processing augmented reality, virtual reality, or augmented virtuality content is illustrated in figures 7 to 9. Such a system includes an immersive wall.

Figure 7 represents a system of the second type. It includes a display 1000 which is an immersive (projective) wall which receives data from a computer 4000. The computer 4000 may receive immersive video data from the internet. The computer 4000 is usually connected to internet, either directly or through a gateway 5000 or a network interface. In a variant, the immersive video data are obtained by the computer 4000 from a local storage (not represented) where the data representative of an immersive video are stored, said local storage can be in the computer 4000 or in a local server accessible through a local area network for instance (not represented).

This system may also include sensors 2000 and user input devices 3000.The immersive wall 1000 can be of OLED or LCD type. It can be equipped with one or several cameras. The immersive wall 1000 may process data received from the sensor 2000 (or the plurality of sensors 2000). The data received from the sensors 2000 may be related to lighting conditions, temperature, environment of the user, e.g. position of objects.

The immersive wall 1000 may also process data received from the user inputs devices 3000. The user input devices 3000 send data such as haptic signals in order to give feedback on the user emotions. Examples of user input devices 3000 are handheld devices such as smartphones, remote controls, and devices with gyroscope functions.

Sensors 2000 and user input devices 3000 data may also be transmitted to the computer 4000. The computer 4000 may process the video data (e.g. decoding them and preparing them for display) according to the data received from these sensors/user input devices. The sensors signals can be received through a communication interface of the immersive wall. This communication interface can be of Bluetooth type, of WIFI type or any other type of connection, preferentially wireless but can also be a wired connection.

Computer 4000 sends the processed data and optionally control commands to the immersive wall 1000. The computer 4000 is configured to process the data, i.e. preparing them for display, to be displayed by the immersive wall 1000. Processing can be done exclusively by the computer 4000 or part of the processing can be done by the computer 4000 and part by the immersive wall 1000.

Figure 8 represents another system of the second type. It includes an immersive (projective) wall 6000 which is configured to process (e.g. decode and prepare data for display) and display the video content. It further includes sensors 2000, user input devices 3000.

The immersive wall 6000 receives immersive video data from the internet through a gateway 5000 or directly from internet. In a variant, the immersive video data are obtained by the immersive wall 6000 from a local storage (not represented) where the data representative of an immersive video are stored, said local storage can be in the immersive wall 6000 or in a local server accessible through a local area network for instance (not represented).

This system may also include sensors 2000 and user input devices 3000.The immersive wall 6000 can be of OLED or LCD type. It can be equipped with one or several cameras. The immersive wall 6000 may process data received from the sensor 2000 (or the plurality of sensors 2000). The data received from the sensors 2000 may be related to lighting conditions, temperature, environment of the user, e.g. position of objects.

The immersive wall 6000 may also process data received from the user inputs devices 3000. The user input devices 3000 send data such as haptic signals in order to give feedback on the user emotions. Examples of user input devices 3000 are handheld devices such as smartphones, remote controls, and devices with gyroscope functions.

The immersive wall 6000 may process the video data (e.g. decoding them and preparing them for display) according to the data received from these sensors/user input devices. The sensors signals can be received through a communication interface of the immersive wall. This communication interface can be of Bluetooth type, of WIFI type or any other type of connection, preferentially wireless but can also be a wired connection. The immersive wall 6000 may include at least one communication interface to communicate with the sensors and with internet.

Figure 9 illustrates a third embodiment where the immersive wall is used for gaming. One or several gaming consoles 7000 are connected, preferably through a wireless interface to the immersive wall 6000. The immersive wall 6000 receives immersive video data from the internet through a gateway 5000 or directly from internet. In a variant, the immersive video data are obtained by the immersive wall 6000 from a local storage (not represented) where the data representative of an immersive video are stored, said local storage can be in the immersive wall 6000 or in a local server accessible through a local area network for instance (not represented).

Gaming console 7000 sends instructions and user input parameters to the immersive wall 6000. Immersive wall 6000 processes the immersive video content possibly according to input data received from sensors 2000 and user input devices 3000 and gaming consoles 7000 in order to prepare the content for display. The immersive wall 6000 may also include internal memory to store the content to be displayed. The immersive wall 6000 can be of OLED or LCD type. It can be equipped with one or several cameras.

The data received from the sensors 2000 may be related to lighting conditions, temperature, environment of the user, e.g. position of objects. The immersive wall 6000 may also process data received from the user inputs devices 3000. The user input devices 3000 send data such as haptic signals in order to give feedback on the user emotions. Examples of user input devices 3000 are handheld devices such as smartphones, remote controls, and devices with gyroscope functions.

The immersive wall 6000 may process the immersive video data (e.g. decoding them and preparing them for display) according to the data received from these sensors/user input devices. The sensors signals can be received through a communication interface of the immersive wall. This communication interface can be of Bluetooth type, of WIFI type or any other type of connection, preferentially wireless but can also be a wired connection. The immersive wall 6000 may include at least one communication interface to communicate with the sensors and with internet.

Figure 17 illustrates block diagrams for an exemplary method for coding a current block of a 2D picture being a projection of an omnidirectional video, according to an embodiment of the present disclosure. At least one picture of said omnidirectional video is represented as a 3D surface, such as a sphere or a cube, such as disclosed above. However, the present principle could be applied to any 3D representation of an omnidirectional video. The 3D surface is projected onto at least one 2D picture using a projection function. For instance, such a projection function could be an equi-rectangular projection or other type of projection function. The 2D resulting picture is then divided into non-overlapping blocks of pixel. The method is here disclosed for at least one current block of the 2D picture to be encoded using a conventional 2D video coding scheme, using conventional neighborhood such as the one disclosed in figure 15.

In a block 1700, at least one neighbor block of said 2D picture is determined for said current block according to the projection function used for projecting the 3D surface onto the 2D picture. The determined neighbor block is not spatially adjacent to said current block in the 2D picture, but the neighbor block is spatially adjacent to the current block on said 3D surface.

According to an embodiment of the present principle, the projection function is an equi-rectangular projection and the 3D surface is a sphere. A neighbor block for a current block located on the right border of the 2D picture is determined by using the following relationship between the Cartesian co-ordinates (normalized) on the XY-plane as illustrated on figure 13B and the angular co-ordinates on the sphere as illustrated on figure 13C:

$$y = \varphi/\pi, \ -0.5 <= y <= 0.5, \ -\pi/2 <= \varphi <= \pi/2$$

$$x = \theta/2\pi, \ 0 <= x <= 1, \ 0 <= \theta <= 2\pi,$$

where (x,y) corresponds to the location of a point M on the normalized XY-plane of the 2D picture and $(\theta, \varphi)$ are the coordinates of a corresponding point M' on the sphere.

In the case of figure 16A, for a right neighbor block of a block of the last column of the 2D picture, e.g. block F, the point of the top-left corner of the block is located at column index w in the 2D picture, and at x=1 on the XY-plane. Its corresponding point on the sphere has angular coordinates $(2\pi, \varphi)=(0, \varphi)$. Therefore, for a current block located on the right border of the 2D picture (i.e. the last column of the 2D picture), the neighbor block is determined as being the first block of the 2D picture on the same row of the current block. For instance, as illustrated on figure 16A, for current blocks F and J, the determined neighbor blocks are respectively A and G.

According to an embodiment of the present disclosure, a neighbor block for a current block located on the right border of the 2D picture may be also neighbor blocks located on the left border of the 2D picture on a row below or above the row of current block. Due to the equi-rectangular projection, such neighbor blocks are at least partially spatially adjacent to the current block on the sphere. For instance, for block J illustrated on figure 16A, blocks A and/or K may be determined as neighbor block according to the present principle since those blocks are at least partially spatially adjacent to block J on the 3D surface. However, to be determined as a neighbor block, the target block, e.g. K, has to be available for coding the current block, i.e. the neighbor block shall have been coded/decoded before the current block according to an scan order used for coding/decoding. Such a case may happen for neighbor block K and current block J for instance, when blocks K and J belongs to coding units comprising a group of blocks which are located on a same row of coding unit.

According to another embodiment, when the projection function is a cube projection, for a current block located on the border of a current face of the cube projected on the 2D picture (e.g. on a last or first column of a current face of the cube), the neighbor block is determined as being a block on a border of another face of the cube with which the current face shares an edge on the 3D surface. For instance, figure 16B illustrates a 2D picture on which the 6 projected faces of a cube have been re-arranged according to the layout shown on figure 16C. For current blocks C, A, E, and K, the neighbor blocks determined according to the present principle are respectively D, F, I and H. For determining the neighbor blocks according to a cube projection, the relationship between the Cartesian coordinates of a point in the XY-plane illustrated on figure 14C and on the cube such as disclosed below, can be used:

$$f \begin{cases} Left: x < w, y > h: u = \frac{2x}{w} - 1, v = \frac{2(y-h)}{h} - 1 \;, k = 0 \\[2mm] front: w < x < 2w, y > h: u = \frac{2(x-w)}{w} - 1, v = \frac{2(y-h)}{h} - 1, k = 1 \\[2mm] right: 2w < x, y > h: u = \frac{2(x-2w)}{w} - 1, v = \frac{2(y-h)}{h} - 1, k = 2 \\[2mm] bottom: x < w, y < h: u = \frac{2y}{h} - 1, v = \frac{2(w-x)}{w} - 1, k = 3 \\[2mm] back: w < x < 2w, y < h: u = \frac{2y}{h} - 1, v = \frac{2(2w-x)}{w} - 1\;, k = 4 \\[2mm] top: 2w < x, y < h: u = \frac{2y}{h} - 1, v = \frac{2(3w-x)}{w} - 1\;, k = 5 \end{cases}$$

with the corresponding layout illustrated on figure 16C. The co-ordinate k denotes the face number and $(u,v)$, where $u,v \in [-1,1]$, denote the coordinates on that face. Each face of the cube is of width w and of height h.

In a block 1701, once at least one neighbor block has been determined according to the present principle, the current block is encoded into said bitstream using at least the determined neighbor block. During encoding of the current block, all the encoding modules or only some of them may use the determined neighbor block, as will be detailed below.

In a block 1702, at least one item of information relating to the projection function is coded into the bitstream. Such item of information allows indicating to the decoder the kind of projection function used to project the 3D surface onto the 2D picture. The decoder can thus determine the neighborhood of the current block as it was performed during encoding and use the same neighborhood.

According to different variants, the item of information relating to the projection function may be coded in a Sequence Parameter Set syntax element such as defined by an H.264/AVC standard or an HEVC standard, or in a Picture Parameter Set syntax element such as defined by an H.264/AVC standard or an HEVC standard, or in a Slice Header syntax element corresponding to said 2D picture, such as defined by an H.264/AVC standard or an HEVC standard. The item of information relating to the projection function may be coded in any suitable syntax element allowing to signal such item at a picture or sequence level.

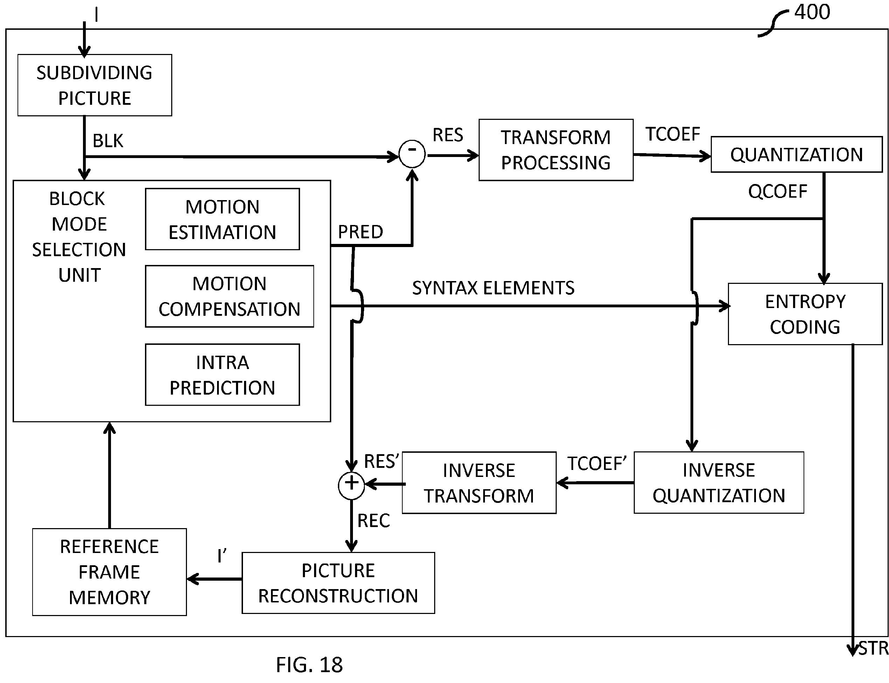

Figure 18 is a schematic block diagram illustrating an exemplary video encoder 400. Such a video encoder 400 performs the encoding into a bitstream of a set of pictures representative of a projection of an omnidirectional video, according to an embodiment of the present principle. The video encoder 400 is disclosed as conforming to an HEVC coder, however the present principle may apply to any 2D video coding schemes processing video as a sequence of 2D pictures.

Classically, the video encoder 400 may include several modules for block-based video encoding, as illustrated in figure 18. A 2D picture I representative of a projected picture from an omnidirectional, video to be encoded is input to the encoder 400.

Firstly, a subdividing module divides the picture I into a set of units of pixels.

Depending on the video coding standard used, the units of pixels delivered by the subdividing module may be macroblocks (MB) such as in H.264/AVC or Coding Tree Unit (CTU) such as in HEVC.

According to an HEVC coder, a coding tree unit includes a coding tree block (CTB) of luminance samples and two coding tree blocks of chrominance samples and corresponding syntax elements regarding further subdividing of coding tree blocks. A coding tree block of luminance samples may have a size of 16x16 pixels, 32x32 pixels or 64x64 pixels. Each coding tree block can be further subdivided into smaller blocks (known as coding blocks CB) using a tree structure and quadtree-like signaling. The root of the quadtree is associated with the coding tree unit. The size of the luminance coding tree block is the largest supported size for a luminance coding block. One luminance coding block and ordinarily two chrominance coding blocks form a coding unit (CU). A coding tree unit may contain one coding unit or may be split to form multiple coding units, and each coding unit having an associated partitioning into prediction units (PU) and a tree of transform unit (TU). The decision whether to code a picture area using inter picture or intra picture prediction is made at the coding unit level. A prediction unit partitioning structure has its root at the coding unit level. Depending on the basic prediction-type decision, the luminance and chrominance coding blocks can then be further split in size and predicted from luminance and chrominance prediction blocks (PB). The HEVC standard supports variable prediction block sizes from 64x64 down to 4x4 samples. The prediction residual is coded using block transforms. A transform unit (TU) tree structure has its root at the coding unit level. The luminance coding block residual may be identical to the luminance transform block or may be further split into smaller luminance transform blocks. The same applies to chrominance transform blocks. A transform block may have size of 4x4, 8x8, 16x16 or 32x32 samples.

The encoding process is described below as applying on a unit of pixels that is called a block BLK. Such a block BLK may correspond to a macroblock, or a coding tree unit, or any sub-block from one of the units described above, or any other layout of subdivision of picture I comprising luminance samples and chrominance samples, or luminance samples only.

The encoding and decoding processes described below are for illustration purposes. According to some embodiments, encoding or decoding modules may be added, or removed or may vary from the following modules. However, the principle disclosed herein could still be applied to these embodiments.

The present principle is disclosed here in the case of an equi-rectangular projection. However, other projection functions may be used. A neighbor block for a current block at a border of the 2D picture determined according to block 1700 is thus determined according to this projection function.

The encoder 400 performs encoding of each block of the picture I as follows. The encoder 400 includes a mode selection unit for selecting a coding mode for a block BLK of a picture to be coded, e.g. based on a rate/distortion optimization. Such a mode selection unit comprising:

- a motion estimation module for estimating motion between one current block of the picture to be coded and reference pictures,
- a motion compensation module for predicting the current block using the estimated motion,
- an intra prediction module for spatially predicting the current block.

The mode selection unit may also decide whether subdivision of the block is needed according to rate/distortion optimization for instance. In that case, the mode selection unit then operates for each sub-block of the block BLK.

The mode selection unit may apply the principle disclosed in relation with figure 17 for deriving neighbor block of a current BLK located on the right border of a 2D picture.

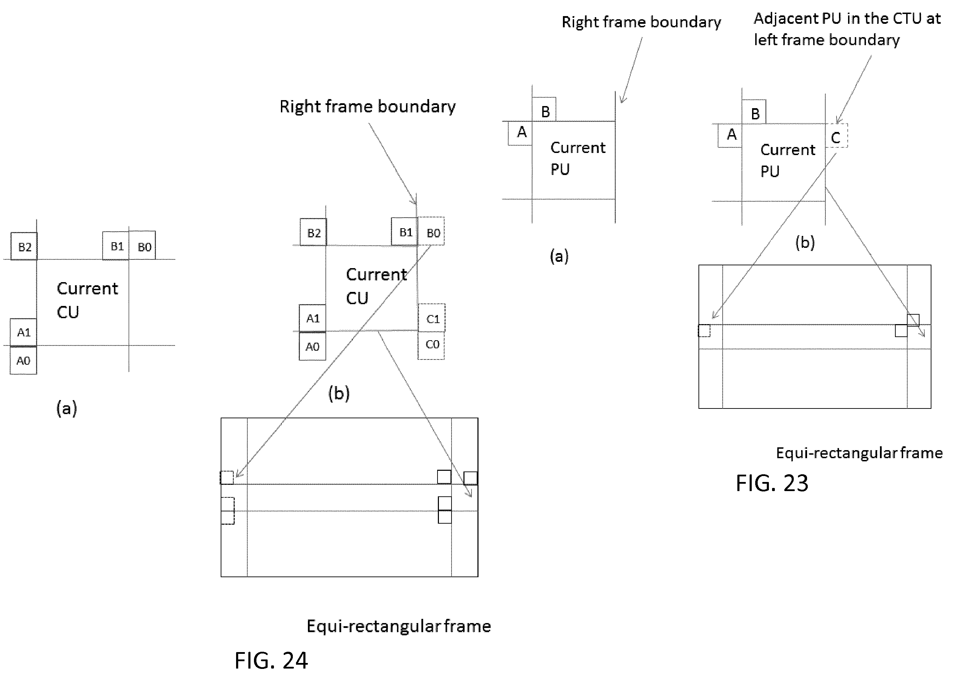

According to a variant, the disclosed principle is performed when determining a most probable mode list for coding an intra prediction coding mode for the current block BLK. According to this variant, the intra prediction mode coding is performed at a prediction unit level, therefore the current block BLK here corresponds to a prediction unit (current PU as illustrated in figure 23). The HEVC standards specifies 33 directional prediction modes (indexed from 2 to 34) corresponding to 33 directional orientations, a planar prediction mode (indexed 0) and a DC prediction mode (indexed 1), resulting in a set of 35 possible intra prediction mode for spatially predicting a current prediction unit. To reduce the bitrate needed to signal which intra prediction mode is used for coding a current prediction unit, a most probable mode (MPM) list is constructed. The MPM list includes the three most probable intra prediction mode for the current block to code. These three MPM are determined according to intra prediction modes used for coding neighboring blocks of the current block. According to HEVC, only the left and above neighbor blocks of the current block are considered, respectively blocks A and B for the current PU illustrated on figure 23(a). If either of the two blocks A and/or B is not available or not intra-coded, the DC prediction mode is assumed.

The set of MPMs is constructed as follows:

(HEVC_1) If A and B are not equal, then MPM[0] = intra-prediction mode of block A, MPM[1] = intra-prediction mode of block B. If neither of A and B is *planar (0),* MPM[2] = planar (0), else, if one of them is planar, but neither is DC mode, then MPM[2] = DC mode (1). Else, if one is planar mode and the other is DC mode, then MPM[2] = directional mode 26 which is the vertical angular prediction mode.

(HEVC_2) If A and B are equal but neither is planar or DC, then MPM[0] = intra-prediction mode of block A, MPM[1] = A-, and MPM[2] = A+, where A- and A+ denote the two adjacent angular modes of intra-prediction mode of block A as specified by the HEVC standard, else, MPM[0] = mode planar (0), MPM[1] = mode DC (1), and MPM[2] = mode 26 (angular vertical).

According to the present principle illustrated on figure 23(b), a new neighbor block for the current block is determined as being the block C at the right of the current block, i.e. according to the projection function the neighbor block is the block in the first CTU in the same row as the current CTU to which the current block belongs. Because of the continuity in equi-rectangular projection, the first and the last CTUs along a row are spatial neighbors.

Then, in addition to the above and left blocks of the current block, the neighbor block at the right is also used for determining the list of MPM. The encoder/decoder saves the intra-prediction modes for the intra-coded (left) boundary blocks in the first CTU in a row, and uses them for coding the (right) boundary blocks in the last CTU. The memory requirement is quite low since it is needed to save the information for the boundary blocks in one CTU only. The set of MPMs is now based for the current block on the prediction modes used in three neighboring blocks (A, B and C) as shown in figure 23 (b). The set of MPM is constructed as follows:

If A and B are not equal, but C is equal to either of them, then the set is constructed using the rule HEVC_1. But if C is not equal to either of them, then MPM[0] = A, MPM[1] = B, and MPM[2] = C.
If A and B are equals and C is equal to both of them, then the set is constructed using the rule HEVC_2.

Else if A and B are equal but C is not equal to them, then the set is constructed using rule HEVC_1, where B is replaced by C.

For the chroma prediction, the HEVC chroma prediction may remain unchanged for the current block as the prediction mode for chroma is not derived based on those of neighboring blocks.

The rest of the process for coding the intra-prediction mode for the current block remains the same as defined in HEVC. If the intra-prediction mode of the current block belongs to the MPM set, then a flag *prev_intra_luma_pred_flag* is set and another flag called *mpm_idx* signals the candidate from the MPM set. If the flag *prev_intra_luma_pred_flag* is not set, then a flag *rem_intra_luma_pred_mode* signals the particular mode from the remaining 32 prediction modes.

When the current block is intra-coded, a predicted block is computed by performing intra-prediction according to the intra-prediction mode selected for the current block. Such process is well known to those skilled in the art and is not discussed further.

According to another variant, the disclosed principle is performed when deriving a motion vector predictor for coding a motion vector for the current block when the current block is inter-predicted. When the current block is inter-predicted, its motion vector is estimated using reference pictures present in reference picture list l0 and or l1 depending on the prediction direction available. A predicted block is computed by motion-compensated the current block using the estimated motion vector. The motion vector of the current block is then coded into the bitstream.

HEVC uses advanced motion vector prediction (AMVP) before encoding the motion vectors of a CU having inter-prediction. Unlike H.264, where a single motion vector is constructed from the neighboring motion vectors as the prediction for the current motion vector, in HEVC, a set of two motion vectors is obtained using the motion vectors from five spatial neighboring blocks, as shown in figure 24 (a), and a co-located temporal motion vector. The two candidate motion vectors A and B are selected as follows: The candidate motion vector A is constructed based on the motion vectors of the spatial neighbors A0 and A1, and the candidate vector B is constructed based on the motion vectors of the spatial neighbors B0, B1, and B2.

If A0 and A1 are not available or are intra-predicted, A is constructed from B0, B1, and B2.

The temporal candidates are considered only when the two spatial candidates are not available, or if they are identical.

Out of the two motion vectors, one is selected as the candidate motion vector for prediction of the current motion vector. The selected motion vector is indicated using flags *mvp_l0_flag* and *mvp_l1_flag* corresponding to list_0 and list_1 reference pictures.

According to this embodiment, for selecting the two candidate motion vectors, the motion vectors of seven neighboring blocks are considered for a current block lying at the right boundary, as shown in figure 24 (b).

For such a current block, the neighbor block B0 is not available if the conventional HEVC method is used.

According to the principle disclosed herein, the blocks B0, C0 and C1 are part of the first CTU on the same row at the left boundary of the frame. These blocks have already been encoded and their motion vector information is available when the current block at the right boundary is encoded. Therefore their motion vector information may be used to improve the set of candidate motions vectors.

According to this variant, for candidate A, the motion vectors of blocks A0, A1, C0 and C1 are considered in that order. For candidate B, the algorithm remains the same as in the HEVC standard.

The one-bit syntax elements *mvp_l0_flag* and *mvp_l1_flag* encodings remain the same as in HEVC, as no extra information needs to be coded. According to this embodiment, the number of predictors from which the set of predictors is increased and the construction of the set is modified, however the number of predictors in the set remains the same, and so no extra information needs to be coded.

According to another variant, when estimating a motion vector for a current block on a boundary of the 2D picture, the motion estimation module may benefit from the continuity at the left and right boundaries of the 2D reference picture in which motion is estimated. In a conventional block-based motion estimation technique, the search range is truncated so that the motion vector does not point to unavailable pixels located outside the 2D reference picture. The search range is the range in which a motion vector is search.

According to this variant, a full search range can now be considered when estimating motion for a current block located on a boundary of the 2D picture. The boundary of the 2D reference picture can be symmetrically extending by using the pixels from the opposite boundary. As a result, an estimated motion vector may point from the current block to pixels outside the reference picture. Such position outside the reference picture corresponds to symmetrically extended blocks of the 2D reference picture. On the decoder side, the decoder only has to perform the symmetric extension of the reference pictures for such motion vectors.

According to another variant, the disclosed principle is performed when deriving motion information in an inter-prediction merging mode for coding a current block located at the right boundary of the 2D picture. In addition to AMVP, HEVC also uses prediction block merging to reduce the encoding of motion information. For that purpose, the HEVC encoder makes a merge-list for the current block to be inter coded by considering the motion information of the same five spatial neighbors (as shown in 24 (a)) and potentially one temporal neighbor. The motion information (prediction direction also referred to the picture reference lists l0 and l1 of reference pictures, reference index of the reference picture in the picture reference list, and motion vectors) of the selected candidate is directly used for predicting the current block without any other side information. In this merging mode, the current block is predicted by inheriting all motion information from the selected candidate. A predicted block is thus computed by motion-compensated the current block using the inherited motion information.

To signal the inter-prediction merging mode, the encoder uses a flag called *merge flag.* If the *merge_flag* is 1, then the syntax element *merge_idx* signals the selected candidate. The maximum number of candidates in the merge list is signaled using a parameter called *cMax* which is signaled in the slice header. The merge list can contain up to four merge candidates derived from the 5 spatial neighbors, one temporal candidate, and additional merge candidates including combined bi-predictive candidates and zero motion vector candidates.

According to this embodiment, the number of spatial motion candidates for a current block located on the right boundary CUs is increased to 5. The additional motion candidate is derived from B0, C0 and C1. This additional motion candidate is included with the other four candidates as derived by HEVC. Consequently, for the boundary CUs the number of candidates is taken as cMax + 1.

Back to figure 18, once a coding mode is selected for the current block BLK, the mode selection unit delivers a predicted block PRED and corresponding syntax elements to be coded in the bitstream for performing the same block prediction at the decoder.

A residual block RES is then obtained by subtracting the predicted block PRED from the original block BLK.

The residual block RES is then transformed by a transform processing module delivering a transform block TCOEF of transformed coefficients. Each delivered transform block TCOEF is then quantized by a quantization module delivering a quantized transform block QCOEF of quantized residual transform coefficients.

The syntax elements and quantized residual transform coefficients of the block QCOEF are then input to an entropy coding module to deliver the coded video data of the bitstream STR.

According to another variant, the disclosed principle may be used by the entropy coding module. HEVC uses a contextual arithmetic entropy coding, also known as CABAC. The arithmetic coding performed by the entropy coding module encodes an entire stream of bits, which is obtained after a suitable binarization of the symbols to encode (syntax element, quantized transform coefficients, etc.), by their joint probability, represented by an interval in (0, 1). The entropy coding module performs arithmetic coding by modelling the probabilities of the symbols through context models for different syntax elements and updating model states after encoding every bit. The context models initialize the probabilities based on the neighborhood encoding information.

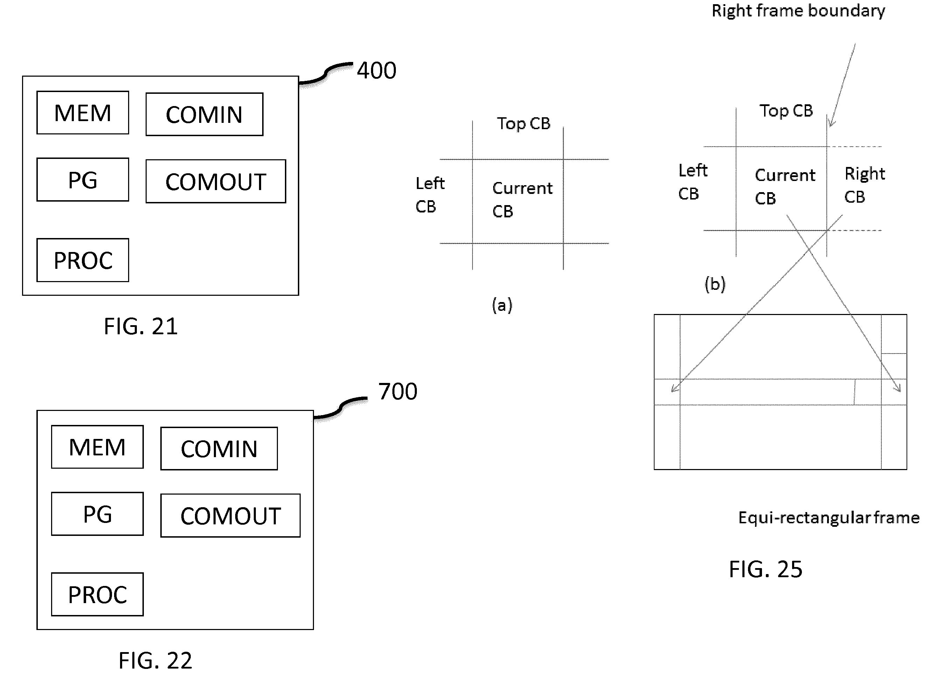

In HEVC, a *CU_split_flag* and a *CU_skip_flag* are coded for a current coding unit to indicate respectively if the coding unit is further split and if the coding unit is skipped (i.e. to indicate whether other information is coded for the current coding unit). The entropy coding module for coding these flags uses information from the previously coded neighboring CUs for selecting the context model used for encoding these flags. A set of three context models for each applicable initialization type is available. As shown in figure 25 (a), the context models for the *CU_split_flag* and the *CU_skip_flag* for the current block are decided based on the neighbor blocks A and B. The *CU_split_flag* context is incremented by one if a neighbor is available and its coding tree depth is greater than the current block. Similarly, the context of the *CU_skip_flag* context is incremented by one if a neighbor is available and its *CU_skip_flag* is set. According to the present principle, for a current block at the right boundary of the 2D picture, the information from the neighbor block which is part of the CTU on the left border which has been already encoded is also considered. This is shown in figure 25 (b). For a current block located at the right boundary of the 2D picture, 4 context models are used for both the *CU_split_flag* and *CU_skip_flag.* As in HEVC, the *CU_split_flag* context is incremented by one if a neighbor (top, left, right) is available and its coding tree depth is greater than the current block. Similarly, the context of the *CU_skip_flag* is incremented by one if a neighbor (top, left, right) is available and its *CU_skip_flag* is set.

Back to figure 18, the quantized residual transform coefficients of the quantized transform block QCOEF are processed by an inverse quantization module delivering a block TCOEFF' of unquantized transform coefficients. The block TCOEF' is passed to an inverse transform module for reconstructing a block of residual prediction RES'.

A reconstructed version REC of the block BLK is then obtained by adding the prediction block PRED to the reconstructed residual prediction block RES'. The reconstructed block REC is stored in memory for later use by a picture reconstruction module for reconstructing a decoded version I' of the picture I. Once all the blocks BLK of the picture I have been coded, the picture reconstruction module performs reconstruction of a decoded version I' of the picture I from the reconstructed blocks REC. Optionally, deblocking filtering may be applied to the reconstructed picture I' for removing blocking artifacts between reconstructed blocks.

According to another variant, an SAO module performing sample adaptive offset filtering on a right boundary CTU may use the disclosed principle. SAO is a process that modifies the decoded samples by conditionally adding an offset value to each sample after the application of the deblocking filter, based on values in look-up tables transmitted by the encoder. SAO is performed on region basis, based on a filtering type selected per CTU.

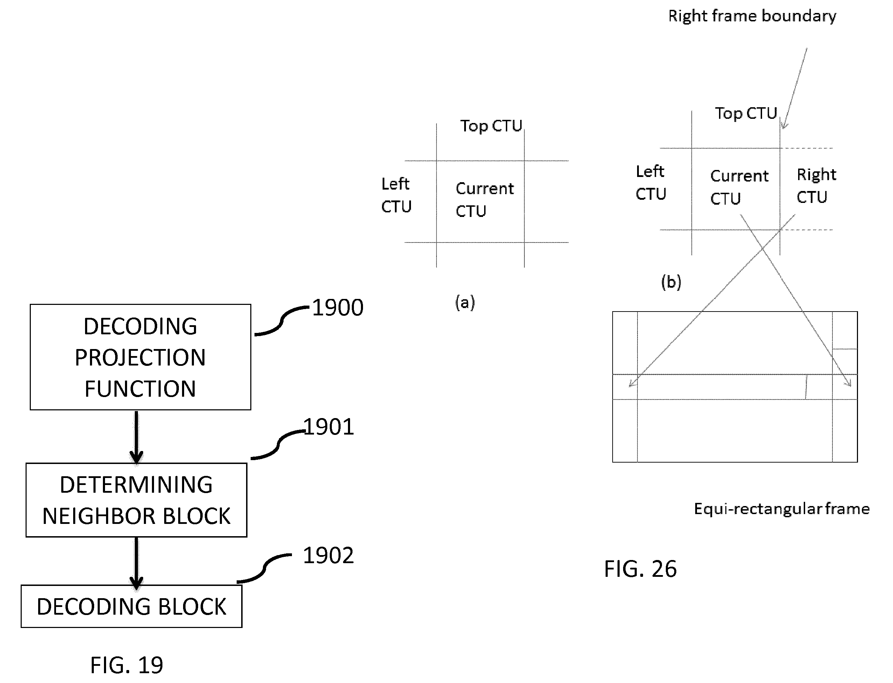

In HEVC, a CTU can use three options to signal SAO parameters: by reusing the SAO parameters of the left CTU or top CTU (figure 26 (a)) or by transmitting new SAO parameters. Two flags called *sao_merge_left_flag* and *sao_merge_top_flag* are set depending on whether the left CTU or the top CTU SAO information is used.

According to this embodiment, an additional flag called *sao_merge_right_flag* is added for the CTUs on the right boundary of a frame. The CTU on the left boundary on the same row is used as the right neighbor. If the current CTU uses the SAO information of the right neighbor, then the *sao_merge_right_flag* is set.

HEVC uses one context model for encoding the *sao_merge_left_flag* and *sao_merge_top_flag.* In this variant, the same context is used to encode the *sao_merge_right_flag* for the right boundary CTUs.

Back to figure 18, once the reconstructed picture I' has been deblocked and has undergone SAO filtering, the resulting reconstructed picture is then added to a reference picture memory for later use as a reference picture for encoding the following pictures of the set of pictures to code.

The bitstream generated from the above-described encoding process is then transmitted over a data network or stored on a memory for immersive rendering of an omnidirectional video decoded from the bitstream STR.

Figure 19 illustrates block diagrams for an exemplary method for decoding a current block of a 2D picture representative of a projection of an omnidirectional video using a projection function, according to an embodiment of the present disclosure. Such method may be performed for instance by a decoder (700) of an immersive system such as disclosed herein.

In a block 1900, an item of information relating to said projection function is decoded from a bitstream representative of the omnidirectional video. Alternatively, the decoder may know the projection function used for projecting the omnidirectional video onto the 2D picture. For instance, such information may be stored in a memory of the decoder.

In a block 1901, for a current block of said 2D picture, at least one neighbor block of said 2D picture is determined according to the projection function as disclosed with block 1700 from figure 17.

In a block 1902, the current block is decoded using at least the determining neighbor block. During decoding of the current block, the determined neighbor block may be used by all the decoding modules of the decoder or by some of those. For instance, such decoding modules may be included in a group comprising:

- a module for determining a most probable mode list for decoding an intra prediction mode for said current block,
- a module for deriving a motion vector predictor for reconstructing a motion vector for said current block,
- a module for deriving motion information in an inter-prediction merging mode for reconstructing said current block,
- a module for contextual arithmetic entropy decoding said current block,
- a module for sample adaptive offset for filtering at least one sample of said current block.

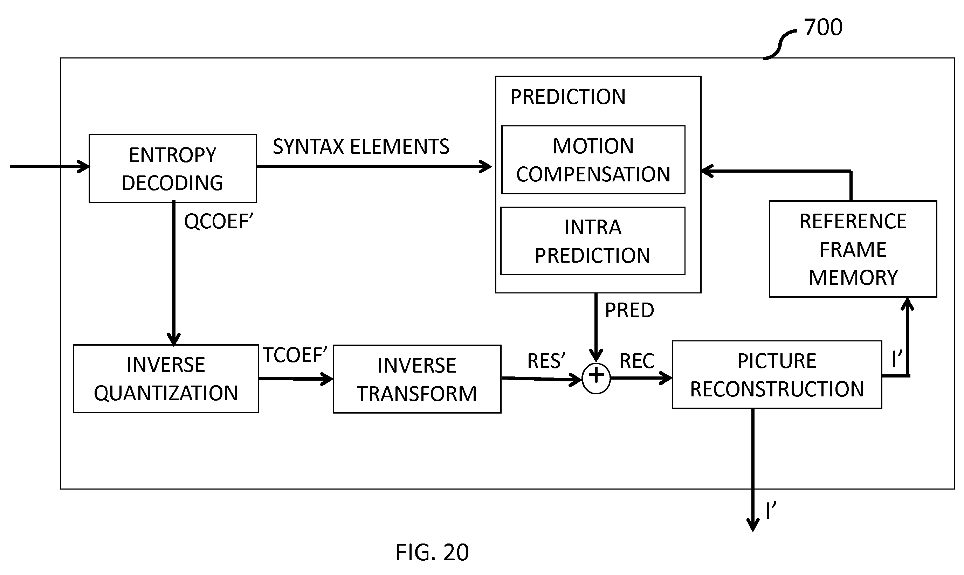

Any one of the embodiment of the methods disclosed with figure 19 can be implemented in an exemplary decoder for decoding a bitstream representative of an omnidirectional video, such as disclosed below and in figure 20, according to an embodiment of the present disclosure.

Figure 20 is a schematic block diagram illustrating an exemplary video decoder method adapted to decode a bitstream encoded using the present principle. A bitstream STR representative of coded pictures representative of a projection of an omnidirectional video onto said 2D picture includes coded data representative of at least one current block BLK of said 2D picture. Such a current block may have been coded according to an embodiment of the present disclosure.

According to an embodiment, the bitstream STR may also include coded data representative of an item of information relating to the projection function.

The video decoder 700 disclosed herein performs the decoding of the pictures according to an HEVC video coding standard. However, the present principle could easily be applied to any video coding standards

The video decoder 700 performs the reconstruction of the omnidirectional video by decoding from the bitstream the coded pictures on a picture-by-picture basis and by decoding each picture on a block-by-block basis. According to the video compression scheme used, parallel processing may be used for decoding the bitstream either on a picture basis or on a block basis. A picture I' is thus reconstructed from the compressed bitstream as follows.

The coded data is passed to the video decoding modules of the video decoder 700. As illustrated in figure 20, coded data is passed to an entropy decoding module that performs entropy decoding and delivers a block QCOEF of quantized transform coefficients to an inverse quantization module and syntax elements to a prediction module. According to an embodiment of the present principle, the entropy decoding module may perform processing as disclosed in blocks 1901 and 1902 from figure 19 for deriving a context model for performing arithmetic binary decoding of a *CU_split_flag* and/or of a *CU_skip_flag* for the current block.

After entropy decoding, the block QCOEF of quantized transform coefficients is inverse quantized by the inverse quantization module to deliver a block TCOEF' of dequantized transform coefficients.

The block TCOEF' of dequantized transform coefficients is inverse transformed by an inverse transform module delivering a residual prediction block RES'.

The prediction module builds a prediction block PRED according to the syntax element and using a motion compensation module if a current block has been inter-predicted or an intra prediction module if the current block has been spatially predicted. When the current block is a block on a border of the 2D picture, for building the prediction block PRED for the current block, the prediction module may perform processing as disclosed in blocks 1901 and 1902 from figure 19 and thus determine a neighbor block for the current block according to the present principle:

- for deriving a motion vector predictor for reconstructing a motion vector for the current block when a residual motion vector has been explicitly coded into the bitstream for the current block, or,
- for deriving motion information for the current block when the current block has been coded using an inter-prediction merging mode, or
- for determining a most probable mode list when the current block has been coded using an intra-prediction mode.

A reconstructed block REC is then obtained by adding the prediction block PRED to the reconstructed residual prediction block RES'. The reconstructed block REC is stored in memory for later use by a picture reconstruction module for reconstructing a decoded picture I'. Once all the blocks of the picture I have been decoded, the picture reconstruction module performs reconstruction of the decoded picture I' from the reconstructed blocks REC. Optionally, deblocking filtering may be applied to the reconstructed picture I' for removing blocking artifacts between reconstructed blocks.

In case the process for deriving the neighborhood of the current block according to an embodiment of the present disclosure has been applied at the encoder in an SAO module, the SAO filtering is also applied at the decoder in a same way as in the encoder. Therefore, for a current block on the border of a 2D picture, the SAO module may perform processing as disclosed in blocks 1901 and 1902 from figure 19 and thus determine a neighbor block for the current block according to the present principle.

The reconstructed picture I' is then stored in a reference picture memory for later use as a reference picture for decoding the following pictures of the set of pictures to decode.

The reconstructed picture I' is then stored on a memory or output by the video decoder apparatus 700 to an immersive rendering device (10) as disclosed above. The video decoder apparatus 700 may also be included in the immersive rendering device (80). In that case, the reconstructed picture I' is output by the decoder apparatus to a display module of the immersive rendering device (80).

According to the immersive rendering system implemented, the disclosed decoder apparatus may be included in any one of the processing devices of an immersive rendering system such as disclosed herein for instance, in a computer (40), or a game console (60), or a smartphone (701), or an immersive rendering device (80), or an immersive wall (6000).

The apparatus decoder 700 may be implemented as hardware or software or a combination of hardware and software thereof.

Figure 21 illustrates the simplified structure of an apparatus (400) for coding an omnidirectional video according to an embodiment. Such an apparatus is configured to implement the method for coding an omnidirectional video according to the present principle which has been described here above in reference with figures 17 and 18.

According to an embodiment, the encoder apparatus includes a processing unit PROC equipped for example with a processor and driven by a computer program PG stored in a memory MEM and implementing the method for coding an omnidirectional video according to the present principles.

At initialization, the code instructions of the computer program PG are for example loaded into a RAM (not shown) and then executed by the processor of the processing unit PROC. The processor of the processing unit PROC implements the steps of the method for coding an omnidirectional video which have been described here above, according to the instructions of the computer program PG.

The encoder apparatus includes a communication unit COMOUT to transmit an encoded bitstream STR to a data network.

The encoder apparatus also includes an interface COMIN for receiving a picture to be coded or an omnidirectional video to encode.

Figure 22 illustrates the simplified structure of an apparatus (700) for decoding a bitstream representative of an omnidirectional video according to an embodiment. Such an apparatus is configured to implement the method for decoding a bitstream representative of an omnidirectional video according to the present principle, which has been described here above in reference with figures 19 and 20.

According to an embodiment, the decoder apparatus includes a processing unit PROC equipped for example with a processor and driven by a computer program PG stored in a memory MEM and implementing the method for decoding a bitstream representative of an omnidirectional video according to the present principles.

At initialization, the code instructions of the computer program PG are for example loaded into a RAM (not shown) and then executed by the processor of the processing unit PROC. The processor of the processing unit PROC implements the steps of the method for decoding a bitstream representative of an omnidirectional video which has been described here above, according to the instructions of the computer program PG.

The apparatus may include a communication unit COMOUT to transmit the reconstructed pictures of the video data to a rendering device.

The apparatus also includes an interface COMIN for receiving a bitstream STR representative of the omnidirectional video to decode from a data network, or a gateway, or a Set-Top-Box.

**Claims**

1. A method for coding a large field of view video into a bitstream, at least one picture of said large field of view video being represented as a surface, said surface being projected onto at least one 2D picture using a projection function, said method comprising, for at least one current block of said at least one 2D picture:

   - determining from said projection function, at least one neighbor block of said 2D picture not spatially adjacent to said current block in said 2D picture, said at least one neighbor block being spatially adjacent to said current block on said surface,
   - encoding said current block using at least said determined neighbor block.

2. An apparatus for coding a large field of view video into a bitstream, at least one picture of said large field of view video being represented as a surface, said surface being projected onto at least one 2D picture using a projection function, said apparatus comprising, for at least one current block of said at least one 2D picture,

   - means for determining from said projection function, at least one neighbor block of said 2D picture not spatially adjacent to said current block in said 2D picture, said at least one neighbor block being spatially adjacent to said current block on said surface,
   - means for encoding said current block using at least said determined neighbor block.

3. A method for decoding a bitstream representative of a large field of view video, at least one picture of said large field of view video being represented as a surface, said surface being projected onto at least one 2D picture using a projection function, said method comprising, for at least one current block of said at least one 2D picture,

   - determining from said projection function, at least one neighbor block of said 2D picture not spatially adjacent to said current block in said 2D picture, said at least one neighbor block being spatially adjacent to said current block on said surface,
   - decoding said current block using at least said determined neighbor block.

4. An apparatus for decoding a bitstream representative of a large field of view video, at least one picture of said large field of view video being represented as a surface, said surface being projected onto at least one 2D picture using a projection function, said apparatus comprising, for at least one current block of said at least one 2D picture,

   - means for determining from said projection function, at least one neighbor block of said 2D picture not spatially adjacent to said current block in said 2D picture, said at least one neighbor block being spatially adjacent to said current block on said surface,
   - means for decoding said current block using at least said determined neighbor block.

5. A method for coding according to claim 1 or an apparatus for coding according to claim 2, wherein encoding said current block belongs to a group comprising at least:

   - determining a most probable mode list for coding an intra prediction mode for said current block,
   - deriving a motion vector predictor for coding a motion vector for said current block,
   - deriving motion information in an inter-prediction merging mode for coding said current block,
   - contextual arithmetic entropy coding said current block,
   - sample adaptive offset filtering at least one sample of said current block.

6. A method for coding according to any one of claims 1 or 5 or an apparatus for coding according to any of claims 2 or 5, further comprising coding an item of information relating to said projection function.

7. A method for decoding according to claim 3 or an apparatus for decoding according to claim 4, wherein decoding said current block belongs to a group comprising at least:

   - determining a most probable mode list for decoding an intra prediction mode for said current block,
   - deriving a motion vector predictor for reconstructing a motion vector for said current block,
   - deriving motion information in an inter-prediction merging mode for reconstructing said current block,
   - contextual arithmetic entropy decoding said current block,
   - sample adaptive offset for filtering at least one sample of said current block.

8. A method for decoding according to any of claims 3 or 7 or an apparatus according to any of claims 4 or 7, further comprising decoding an item of information relating to said projection function.

9. A method according to any one of claims 1, 3, 5 to 8 or an apparatus according to any of claims 2, 4-8, wherein said 3D surface is a sphere and said projection function is an equi-rectangular projection.

10. A method according to claim 9 or an apparatus according to claim 9, wherein said current block is located on a right border of the 2D picture and said at least one neighbor block is located on a left border of the 2D picture.

11. A computer program comprising software code instructions for performing the method according to any one of claims 1, 3 or any one of claims 5 to 10, when the computer program is executed by one or several processors.

12. A bitstream representative of a coded large field of view video, at least one picture of said large field of view video being represented as a surface, said surface being projected onto at least one 2D picture using a projection function, said bitstream comprising:

   - coded data representative of at least one current block of said 2D picture, said current block being coded using at least one neighbor block of said 2D picture not spatially adjacent to said current block in said 2D picture, said at least one neighbor block being spatially adjacent to said current block on said surface.

13. A bitstream according to claim 12, further comprising coded data representative of an item of information relating to said projection function.

14. An immersive rendering device comprising an apparatus for decoding a bitstream representative of a large field of view video according to claim 4.

15. A system for immersive rendering of a large field of view video encoded into a bitstream, comprising at least:

   - a network interface (600) for receiving said bitstream from a data network,
   - an apparatus (700) for decoding said bitstream according to claim 4,
   - an immersive rendering device (900).

FIG. 1

FIG. 2

FIG. 3

FIG. 4

EP 3 301 914 A1

EP 3 301 914 A1

Internet

701

705
smartphone

70

User inputs

sensors

30

20

FIG. 5

GW

Internet

80

User inputs

sensors

30

20

FIG.6

FIG. 7

FIG. 8

EP 3 301 914 A1

FIG. 9

FIG. 10

70

Communication I/f
702

Smartphone housing
705

optics
704

FIG. 11

80

801
display

804

802
touchpad

Communication I/f
806

processing

805

memory

camera
803

FIG. 12

S

FIG. 13A

F

FIG. 13B

x

y

M

O

FIG. 13C

θ

φ

M'

O

FIG. 14B

FIG. 14D

FIG. 14A

FIG. 14C

FIG. 14E

| A | B |
|---|---|
| C | D |
| | BK |

FIG. 15

FIG. 16A

FIG. 16B

```
DETERMINING
NEIGHBOR BLOCK          1700
        |
        v
ENCODING BLOCK          1701
        |
        v
CODING
PROJECTION              1702
FUNCTION
```

FIG. 17

EP 3 301 914 A1

FIG. 18

EP 3 301 914 A1

FIG. 20

FIG. 23

FIG. 24

EP 3 301 914 A1

MEM COMIN

PG COMOUT

PROC

400

**FIG. 21**

MEM COMIN

PG COMOUT

PROC

700

**FIG. 22**

Right frame boundary

Top CB

Left CB

Current CB

(a)

Top CB

Left CB

Current CB

Right CB

(b)

Equi-rectangular frame

**FIG. 25**

Right frame boundary

Top CTU

| Left CTU | Current CTU |

(a)

Top CTU

| Left CTU | Current CTU | Right CTU |

(b)

Equi-rectangular frame

FIG. 26

```
┌─────────────────┐
│    DECODING     │──1900
│   PROJECTION    │
│    FUNCTION     │
└─────────────────┘
         │
         ▼
┌─────────────────┐
│   DETERMINING   │──1901
│  NEIGHBOR BLOCK │
└─────────────────┘
         │
         ▼
┌─────────────────┐──1902
│  DECODING BLOCK │
└─────────────────┘
```

FIG. 19

Europäisches
Patentamt

European
Patent Office

Office européen
des brevets

# EUROPEAN SEARCH REPORT

**Application Number**

EP 16 30 6262

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/112704 A1 (GRANGE ADRIAN WILLIAM [US] ET AL) 21 April 2016 (2016-04-21) * the whole document * ----- | 1-15 | INV. H04N19/105 H04N19/13 H04N19/176 |
| X | US 2006/034374 A1 (PARK GWANG-HOON [KR] ET AL) 16 February 2006 (2006-02-16) * the whole document * ----- | 1-15 | H04N19/52 H04N19/597 H04N19/593 |
| A | BYEONGDOO CHOI: "Draft Version of Omnidirectional Media Application Format (OMAF) WD", 115. MPEG MEETING; 30-5-2016 - 3-6-2016; GENEVA; (MOTION PICTURE EXPERT GROUP OR ISO/IEC JTC1/SC29/WG11),, no. m38855, 2 June 2016 (2016-06-02), XP030067207, * the whole document * ----- | 1-15 | |

**TECHNICAL FIELDS SEARCHED (IPC)**

H04N

The present search report has been drawn up for all claims

| Place of search | Date of completion of the search | Examiner |
|---|---|---|
| Munich | 28 March 2017 | Lombardi, Giancarlo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

  ...........................................................................................

& : member of the same patent family, corresponding
document

EPO FORM 1503 03.82 (P04C01)

**EP 3 301 914 A1**

## ANNEX TO THE EUROPEAN SEARCH REPORT
## ON EUROPEAN PATENT APPLICATION NO.

EP 16 30 6262

28-03-2017

| Patent document cited in search report | Publication date | Patent family member(s) | Publication date |
|---|---|---|---|
| US 2016112704 A1 | 21-04-2016 | NONE | |
| US 2006034374 A1 | 16-02-2006 | CN 101002479 A | 18-07-2007 |
| | | JP 4842945 B2 | 21-12-2011 |
| | | JP 2008510358 A | 03-04-2008 |
| | | KR 20060015225 A | 16-02-2006 |
| | | US 2006034374 A1 | 16-02-2006 |

EPO FORM P0459

For more details about this annex : see Official Journal of the European Patent Office, No. 12/82